Europäisches Patentamt

European Patent Office

Office européen des brevets

(19)

(11) Numéro de publication: **0 397 563**
**A1**

(12) **DEMANDE DE BREVET EUROPEEN**

(21) Numéro de dépôt: **90401232.5**

(51) Int. Cl.⁵: **H02M 3/315, H05G 1/12**

(22) Date de dépôt: **09.05.90**

(30) Priorité: **12.05.89 FR 8906254**

(43) Date de publication de la demande:
**14.11.90 Bulletin 90/46**

(84) Etats contractants désignés:
**DE ES GB NL**

(71) Demandeur: **GENERAL ELECTRIC CGR S.A.**
**100, rue Camille-Desmoulins**
**F-92130 Issy les Moulineaux(FR)**

(72) Inventeur: **Callier, Bernard, Cabinet**

**Ballot-Schmit**
**7, rue le Sueur**
**F-75116 Paris(FR)**
Inventeur: **Maynard, Jean-Pierre, Cabinet**
**Ballot-Schmit**
**7, rue le Sueur**
**F-75116 Paris(FR)**

(74) Mandataire: **Schmit, Christian Norbert Marie**
**et al**
**Cabinet Ballot-Schmit 7, rue Le Sueur**
**F-75116 Paris(FR)**

(54) **Générateur haute tension à grande dynamique de puissance.**

(57) On réalise un montage permettant le passage d'une utilisation pont complet à l'utilisation demi-pont d'un onduleur (7) d'un générateur de haute tension, en remplaçant un circuit de connexion (20) d'un point milieu d'un premier redresseur (1) de ce générateur à un point milieu (21) de l'onduleur, par un circuit (T₅,T₆) commandé (8) en fréquence au rythme ou est commandé l'onduleur lui même. Cette solution permet de rendre compatible les deux montages et de passer automatiquement de l'un à l'autre en fonction, soit d'une puissance importante à fournir, soit d'une ondulation d'une tension résiduelle redressée par un deuxième redresseur à ne pas tolérer.

FIG_1

EP 0 397 563 A1

# GENERATEUR HAUTE TENSION A GRANDE DYNAMIQUE DE PUISSANCE

La présente invention a pour objet un générateur haute tension a grande dynamique de puissance particulièrement utilisable dans le domaine médical pour alimenter un tube à rayons X. Il pourrait néanmoins être utilisé dans d'autres domaines où des puissances importantes de quelques centaines de kilowatts, et à des très hautes tensions de l'ordre de centaines de kilovolts, sont aussi rencontrées.

Des problèmes de dynamique de puissance sont essentiellement rencontrés lorsqu'il s'agit de réguler la haute tension continue produite par un générateur quelle que soit la puissance consommée par la charge dans lequel ce générateur débite. Ceci s'explique de la manière suivante. Les générateurs de haute tension utilisés couramment comportent un redresseur qui transforme un signal alternatif basse tension fourni par un réseau de distribution électrique en un signal électrique continu basse tension. Ce signal continu est ensuite introduit dans un onduleur haute fréquence, souvent à résonance, qui le transforme en un signal alternatif haute fréquence. La tension du signal alternatif haute fréquence est alors amplifiée par un transformateur élévateur de tension. Le signal de tension élevée est ensuite redressé par un deuxième redresseur pour délivrer le signal haute tension continu d'alimentation du générateur.

Dans les applications médicales, cette haute tension sert à alimenter un tube à rayons X. La raison de l'utilisation d'un onduleur haute fréquence se situe dans l'encombrement représenté par les condensateurs du deuxième redresseur. En effet, si ce deuxième redresseur est un redresseur haute fréquence, les capacités nécessaires pour amortir les ondulations des alternances redressées sont d'autant plus faibles que la fréquence du signal à redresser est élevée. Dans un onduleur à résonance, du courant électrique est amené à circuler dans un circuit résonnant LC, en général série, alternativement dans un sens puis dans l'autre. C'est ce signal alternatif dont la tension est élevée et qui est ultérieurement redressé. Le redressement de ce signal alternatif, malgré un choix judicieux des condensateurs du deuxième redresseur n'est jamais parfait. Ce signal redressé comporte des ondulations résiduelles provoquées par la consommation électrique dans la charge : dans le tube à rayons X. Ces ondulations sont proportionnelles à la tension d'alimentation.

Quand le générateur débite à haute puissance on utilise tous les composants au maximum de leurs performances et on tolère en définitive une certaine ondulation dont on ne peut se défaire. Cette ondulation présente l'inconvénient de faire varier la haute tension d'alimentation du tube à rayons X et en définitive de modifier la dureté des rayonnements X émis par ce tube tout au long de cette ondulation. Ceci s'exerce bien entendu au détriment de la qualité des images radiographiques susceptibles d'être obtenues avec de tels tubes. Lorsque l'on passe en demi puissance ou en puissance inférieure, en conservant la même tension d'alimentation et les mêmes éléments composants, cette ondulation résiduelle de la haute tension persiste provoquant les mêmes effets.

Pour remédier à cet inconvénient il a déjà été proposé, à puissance plus faible, d'utiliser des onduleurs dits demi-ponts au lieu d'onduleurs dit pont complets. Dans ce cas on crée un point milieu au premier redresseur du générateur. Ce point milieu est tel que la tension continue à ce point milieu est la moitié de la tension continue délivrée par ce premier redresseur. On alimente alors alternativement un circuit LC résonnant (série) entre ce point milieu et chacune des deux bornes d'alimentation du premier redresseur. Dans ces conditions les circuits résonnants sont en définitive soumis à une alimentation moitié du cas précédent. Il en résulte que les ondulations résiduelles de la haute tension produite sont alors divisées par deux. Dans le but de réduire les frais, on a pris l'habitude d'utiliser une partie des onduleurs pont complet pour les transformer en des onduleurs demi-ponts. On utilise alors un point milieu d'un onduleur pont complet que l'on relie au point milieu du premier redresseur. La liaison est faite par l'intermédiaire d'un interrupteur. Lorsque cet interrupteur est ouvert, l'onduleur est utilisé en pont complet. Lorsque l'interrupteur est fermé, l'onduleur est utilisé en demi-pont.

De tels dispositifs présentent cependant l'inconvénient de ne pas être très compatibles l'un avec l'autre. En effet, l'interrupteur est un interrupteur électromécanique présentant un temps de montée au moment de la mise en conduction de l'ordre de 100 ms. Pour une application de type médical, c'est trop long. On notera que les fréquences d'ondulation des onduleurs sont généralement de 10 à 20 KHz. Cette incompatibilité à pour effet que les protocoles d'utilisation des onduleurs doivent être bien différenciés. En particulier dans l'invention, on a cherché à résoudre le problème de réduction du temps de montée en basse puissance en utilisant les caractéristiques de temps de montée rapide de l'onduleur pont complet, pendant la phase ascendante de la haute tension redressée. Ensuite on bascule l'onduleur sur une utilisation onduleur demi-pont dès que la haute tension est établie du fait que, dans l'expérimentation entreprise on serait en basse puissance. L'incompatibilité précitée des systèmes de connexion précédents ne permet pas un tel basculement. Il en résulte qu'en basse puissance les générateurs ont toujours des temps de montée élevés, alors qu'ils seraient susceptibles de délivrer plus vite, par exemple en une milliseconde, la haute tension qu'on attend d'eux si on les alimentait en pont complet. Ils auraient une ondulation résiduelle aussi deux fois moins forte si, une fois que cette haute tension est atteinte, on savait basculer l'onduleur du montage pont complet en montage demi-pont.

Le dispositif de l'invention permet justement d'atteindre ce résultat. En particulier, il permet aussi un passage automatique de l'utilisation demi-pont à l'utilisation pont complet et vice versa. Ce passage devient donc transparent pour l'utilisateur qui n'a plus à déterminer préalablement les protocoles d'utilisation haute puissance ou basse puissance. Ce passage automatique permet alors au générateur de fonctionner en permanence dans des conditions optimales d'ondulation résiduelle la plus faible compte tenu de la puissance demandée par la charge.

Le principe de l'invention repose sur le remplacement de l'interrupteur qui permet de connecter le point milieu du demi-pont du point milieu du redresseur par un interrupteur piloté à la haute fréquence d'ondulation de l'onduleur. Dans une variante particulière, cet interrupteur est même réalisé en plaçant tête bêche deux thyristors déclenchés, alternativement, chacun deux fois de suite.

L'invention concerne donc un générateur haute tension a grande dynamique de puissance comprenant

- un premier redresseur alternatif-continu pour redresser un signal électrique alternatif basse fréquence et basse tension en un signal continu basse tension,
- un onduleur pont complet commandé en haute fréquence pour transformer ce signal continu basse tension en un signal alternatif haute fréquence et basse tension,
- un transformateur pour élever la tension de ce signal alternatif haute fréquence et basse tension,
- et un deuxième redresseur pour transformer un signal alternatif haute fréquence et haute tension ainsi obtenu en un signal continu haute tension, caractérisé en ce qu'il comporte
- un circuit de connexion commandé en haute fréquence pour connecter un point milieu du premier redresseur à un point milieu de l'onduleur pont complet, lorsque le générateur est utilisé en basse puissance.

L'invention sera mieux comprise à la lecture de la description qui suit et à l'examen des figures qui l'accompagnent. Celles-ci ne sont données qu'à titre indicatif et nullement limitatif de l'invention.

Les figures montrent :

- figure 1 : une représentation schématique du générateur de l'invention.

- figure 2 : des diagrammes temporels de signaux émis par un circuit de commande de l'onduleur; ce circuit de commande commandant de préférence aussi le circuit de connexion.

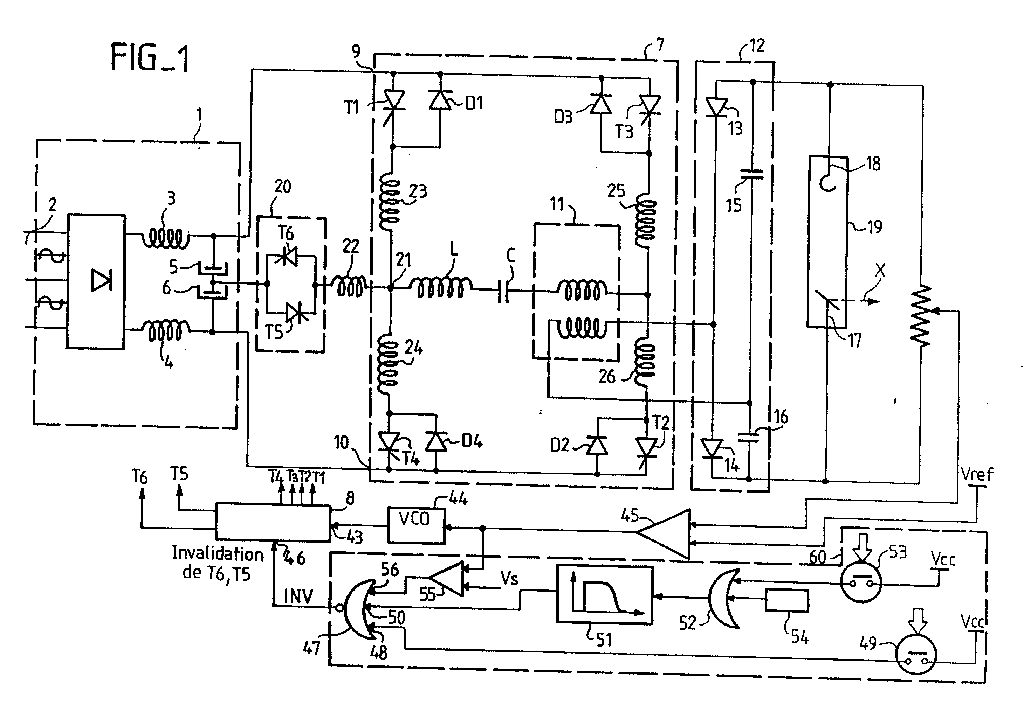

La figure 1 montre un générateur haute tension à grande dynamique de puissance selon l'invention. Ce générateur comporte un premier redresseur 1 qui reçoit un signal électrique basse tension basse fréquence de puissance distribué normalement par un réseau électrique 2 de distribution. Dans un exemple, ce premier redresseur 1 comporte en série deux inductances de choc 3 et 4, en série de part et d'autre avec deux condensateurs 5 et 6 en série. Le point milieu des condensateurs 5 et 6 sert de point milieu de sortie du redresseur. Les bornes non reliées entre elles des condensateurs 5 et 6 délivrent les potentiels extrêmes (0 volt, et 600 volts dans un exemple) produits par le premier redresseur 1.

Le générateur comporte également un onduleur pont complet 7, commandé en haute fréquence par un circuit de commande 8 pour délivrer un signal alternatif haute fréquence basse tension (de l'ordre de 600 Volts). L'onduleur pont complet est raccordé normalement aux bornes extrêmes 9 et 10 du redresseur 1. L'onduleur représenté ici est un onduleur résonnant comportant un circuit LC série relié en position intermédiaire à deux ponts symétriques à thyristors. Un premier pont de thyristors comporte le thyristor $T_1$ et le thyristor $T_2$. Le thyristor $T_1$ est branché entre la borne d'entrée 9 de l'onduleur 7 et une borne de l'inductance d'un circuit résonnant LC. L'autre borne de l'inductance est reliée à une borne de la capacité C. L'autre borne de la capacité C est reliée, indirectement, à l'anode du thyristor $T_2$. La cathode du thyristor $T_2$ est reliée par ailleurs à la borne de sortie 10 de l'onduleur. L'onduleur 7 comporte aussi un deuxième pont de thyristor $T_3$ et $T_4$ dont les anodes et cathodes sont reliées, d'une manière comparable aux anodes et aux cathodes des thyristors $T_1$ et $T_2$, aux bornes 9 et 10 de l'onduleur d'une part et aux bornes du circuit LC série d'autre part. Le deuxième pont $T_3$ et $T_4$ est cependant raccordé de telle façon que le courant qu'il induit dans le circuit LC, au moment où ces thyristors $T_3$ et $T_4$ sont déclenchés, soit de sens inverse à celui qui résulte de la mise en conduction des thyristors $T_1$ et $T_2$. Les thyristors sont munis de gâchettes représentées par des petits traits en oblique. Ces gâchettes reçoivent des signaux indiqués $T_1$ à $T_4$ et produits par le circuit logique de commande 8.

Entre la borne de la capacité C non reliée à la l'inductance L et un premier point milieu intermédiaire entre les thyristors $T_3$ et $T_2$ est branché le

primaire d'un transformateur 11. Le transformateur 11 est un transformateur élévateur dont le secondaire est relié à un deuxième redresseur 12. Le redresseur 12 comporte, dans un exemple, une série de deux diodes de 13 et 14 branchées en parallèle d'une série de deux condensateurs 15 et 16. Le secondaire du transformateur 11 est relié entre les points milieux des diodes et des condensateurs. La sortie redressée du redresseur 12 est disponible aux points de connexions de ces deux circuits parallèles. Dans un exemple, la haute tension délivrée par le redresseur 12 est appliquée à l'anode 17 et à la cathode 18 d'un tube à rayons X 19.

Le circuit de l'invention comporte également un interrupteur 20 placé entre le point milieu de la sortie du premier redresseur 1 et un deuxième point milieu de l'onduleur 7. Le deuxième point milieu de l'onduleur 7 auquel est raccordé l'interrupteur 20 est celui qui se situe à la borne 21 de l'inductance L, borne non reliée à la capacité C.

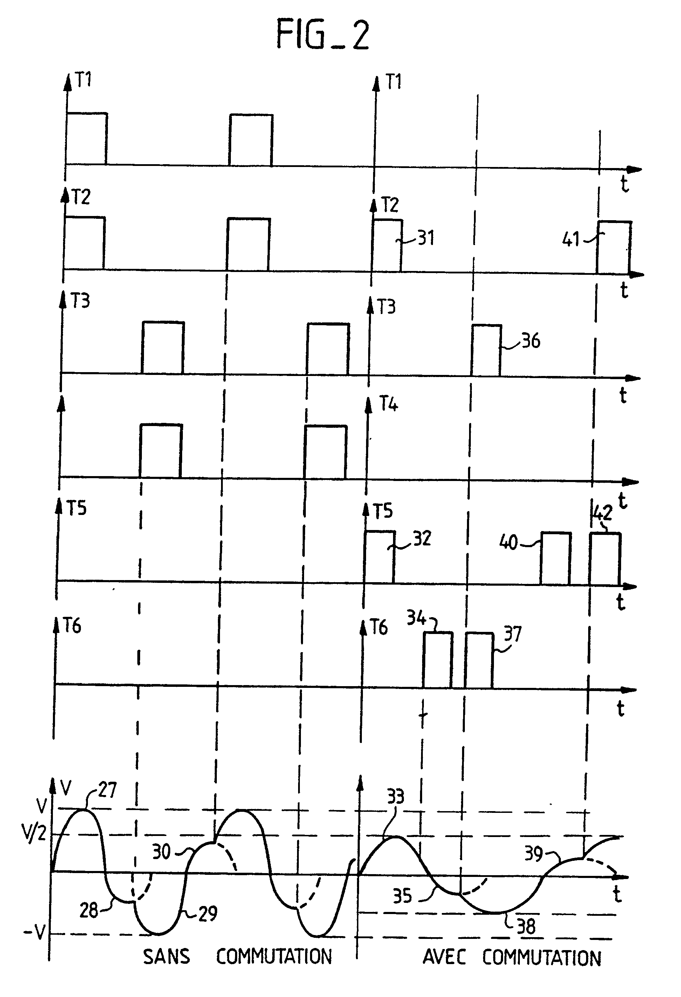

La figure 2 montre des diagrammes temporels permettant de comprendre le fonctionnement de l'invention. Cette figure 2 comporte deux parties : une partie gauche où l'onduleur est utilisé en pont complet, et une partie droite où il est utilisé en demi-pont. Dans l'utilisation en demi-pont on s'attend à consommer une énergie moins grande, et à en profiter pour diminuer le taux d'ondulation résiduelle de la tension redressée par le deuxième redresseur 12. La partie gauche de la figure correspond à un fonctionnement classique. Dans ce fonctionnement, le circuit logique de commande 8 reçoit un signal d'invalidation INV qui neutralise l'interrupteur 20.

Dans l'invention, l'interrupteur 20 comporte deux thyristors $T_5$ et $T_6$ montés têtes bêches en parallèles l'un de l'autre. Ceci signifie que l'anode d'un thyristor est reliée à la cathode de l'autre et vice versa. Ces deux thyristors en parallèles sont montés en série dans l'interrupteur 20. En outre, pour parfaire le fonctionnement de l'interrupteur ainsi que celui de l'onduleur 7 des inductances de suroscillation 22 à 26 sont placées en série dans l'interrupteur et dans les différentes branches du circuit de l'onduleur.

Au moment où on veut mettre en service le tube à rayons X 19, dans une utilisation classique, on fait déclencher par le circuit de commande 8 les thyristors $T_1$ et $T_2$ (voir figure 2). Dans ces conditions le courant s'établit dans le circuit LC de l'onduleur 7 en une alternance positive 27. Cette alternance culmine à une tension V dépendant du facteur de surtension du circuit LC et de la tension délivrée par le redresseur 1. Le circuit résonnant LC induit ensuite une alternance négative 28 de retour du courant. Le retour de courant s'effectue par des diodes $D_2$ et $D_1$ branchées en parallèle

des thyristors $T_2$ et $T_1$ respectivement. Ce retour du courant a pour effet de d'achever de bloquer les thyristors $T_1$ et $T_2$. A un instant ultérieur, qui peut se situer pendant l'alternance négative 28, on déclenche le deuxième pont de thyristors $T_3$, $T_4$ de manière à produire une alternance négative 29. Celle-ci vient culminer à la tension -V en prenant le relais de l'alternance de réaction 28. L'alternance 29 donne lieu par réaction à une alternance 30 qui permet de rebloquer les thyristors $T_3$ $T_4$ au moyens des diodes $D_3$ $D_4$. Le phénomène se perpétue si on commande à nouveau les thyristors $T_1$ et $T_2$.

La commande de l'onduleur est normalement en haute fréquence. La tension indiqué au bas de la figure 3 est sensiblement alternative. Elle est en définitive celle à laquelle est soumis le primaire du transformateur élévateur 11. Elle produira la haute tension haute puissance attendue. Le fonctionnement de l'invention est alors le suivant.

Autant dans le fonctionnement de l'onduleur 7 à pont complet les thyristors $T_5$ et $T_6$ ne sont jamais sollicités, autant dans l'utilisation demi-pont les thyristors $T_1$ et $T_4$ ne seront jamais sollicités. Au cours d'une première alternance, on déclenche au moyen du circuit 8, par une impulsion 31 le thyristor $T_2$, et par une impulsion simultanée 32 le thyristor $T_5$. Dans ces conditions, une première alternance 33 se développe dans le circuit LC, le courant passant de la gauche de la figure vers la droite. Le circuit LC est en effet à ce moment alimenté entre la borne 10 et le point milieu du premier redresseur 1. Avant que cette alternance 33 ne s'inverse, on déclenche par une impulsion 34 le thyristor $T_6$, monté tête bêche en parallèle du thyristor $T_5$. Ce thyristor $T_6$ va alors jouer, pour le thyristor $T_5$, le même rôle que joue la diode $D_2$ pour le thyristor $T_2$. Le thyristor $T_6$ et la diode $D_2$ assurent le retour du courant de l'alternance de réaction 3 conséquence de l'alternance 33.

Puis, à un instant suivant, qui peut se situer pendant l'alternance de réaction 35, on déclenche une impulsion 36 du thyristor $T_3$ en même temps qu'une deuxième impulsion 37 du thyristor $T_6$. Ce faisant, le circuit LC est maintenant alimenté entre la borne 9 et le point milieu du redresseur 1. Une alternance 38 de courant se développe, d'amplitude symétrique de l'alternance 33. On remarquera que ces alternances 33 et 38 ont une amplitude moitié des alternances 27 et 29 précédentes. Il en résulte que le redresseur 12 produira un signal redressé avec moins d'ondulation résiduelle. En effet les alternances 33 et 38 culminent à des tensions de l'ordre de V/2. La mise en conduction du thyristor $T_6$ à pour autre résultat de parfaire le reblocage du thyristor $T_5$. Aussi, pour assurer le retour de courant de l'alternance de réaction 39 consécutive à l'alternance 38, on redéclenche par une impulsion 42 le thyristor $T_5$. Ainsi de suite le phénomène recommence et à une période suivante les thyristors $T_2$ et $T_5$ sont à nouveau commandés par des impulsions de commande 41 et 42.

De la même façon que l'impulsion 37 de commande du thyristor $T_6$ suivait l'impulsion 34, on observe que l'impulsion 42 suit l'impulsion 40. En conséquence, à chaque cycle du signal alternatif à redresser dans le transformateur 11, chacun des thyristors $T_5$ et $T_6$ est déclenché deux fois de suite. Cette précaution permet d'assurer le fonctionnement dans le cas où, du fait de la régulation, on serait amené à attendre la fin des alternances de réaction 35 ou 32 avant de redéclencher les thyristors $T_3$ ou $T_2$.

Si l'onduleur pont complet est commandé par le circuit logique 8 une fréquence de l'ordre de 20 KHz, les impulsions sur les thyristors $T_1$ à $T_4$ sont données à un rythme de 20 KHz, mais déphasés d'une demi période pour deux d'entre eux. Par contre, en demi-pont si la commande des thyristors $T_5$ et $T_6$ est aussi appliquée au rythme de 20 KHz, elle est en plus augmentée par la présence des impulsions intermédiaires 34 ou 40. L'impulsion 34 comme l'impulsion 40 doivent de préférence être déclenchées alors que le thyristor qu'elles déclenchent est encore polarisé en inverse de manière à ce qu'il soit effectivement déjà fermé lorsque l'alternance s'inverse. En conséquences, les impulsions 34 et 40 doivent être suffisamment longue pour ne cesser que lorsque le signal dans le circuit résonnant LC s'est inversé.

On sait fabriquer des circuits logiques de commande 8 tels qu'ils permettent la commande des thyristors $T_1$ à $T_6$ comme montré sur la figure 2. Mais dans l'invention, on a utilisé la performance d'un tel circuit pour conduire simplement à d'autres fonctions. Le circuit 8 comporte classiquement une entrée 43 pour recevoir un signal délivré par un oscillateur commandé en fréquence 44 recevant un signal d'erreur délivré par un comparateur 45. Le comparateur 45 compare une tension de référence $V_{ref}$ à une tension U prélevée aux bornes du tube 19. En fonction du signal d'erreur la fréquence d'application des impulsions de commande des thyristors $T_1$ à $T_6$ est modifiée. Ceci signifie que dans un cas comme dans l'autre on peut faire varier la durée qui sépare le impulsions 31 et 41 ou 32 et 42 en fonction de l'écart de la tension mesurée par rapport à la tension de référence qu'on cherche à imposer.

Par contre le circuit 8 comporte ses propres moyens de retard qui permettent de retarder le déclenchement de l'impulsion 34 du thyristor $T_6$ par rapport à l'instant de déclenchement 32 dudit thyristor $T_5$. En effet, ce retard n'est lié qu'à la fréquence de résonance propre du circuit LC. Les variations de fréquence ne sont pas si importantes qu'elles pourraient amener les impulsions 34 et 37 à se chevaucher. Encore que cette situation ne serait pas véritablement préjudiciable au fonctionnement du système.

Le circuit de commande 8 comporte en plus une entrée 46 d'invalidation qui reçoit un signal d'invalidation INV. Le mode d'invalidation peut être de tout type connu. Le signal d'invalidation est délivré par un circuit 60 logique susceptible d'exécuter des fonctions supplémentaires. Le circuit logique 60 délivre le signal INV. Le circuit logique 60 comporte, dans un exemple, une porte NOR 47, qui peut recevoir sur une entrée 48 un signal délivré par un interrupteur 49 d'imposition de la haute puissance. Par exemple, si on veut forcer le circuit à fonctionner en pont complet, on ferme l'interrupteur 49 et l'entrée 48 est soumise à un potentiel positif VCC. Le signal de sortie de la porte 47 est alors à 0 et le circuit 8 invalide la commande des thyristors $T_5$, $T_6$ alors qu'il revalide la commande des thyristors $T_1$ et $T_4$.

La porte 48 comporte une autre entrée 50 qui reçoit un signal délivré par un monostable 51. Le monostable 51 est déclenché par un signal de sortie d'une porte OU 52. Un interrupteur 53 de début de pose ou un circuit 54 de déclenchement de type cinéma sont reliés à la porte OU 52. Le circuit 53 peut être manipulé au coup par coup, alors que le circuit 54 délivre des impulsions au rythme des clichés radiographiques que l'on veut prendre avec le tube à rayons X 19. La porte 52 délivre donc une impulsion longue ou une série d'impulsions le cas échéant. En conséquence, le monostable 52 délivre une impulsion courte ou une série d'impulsions courtes. Il en résulte que le montage demi-pont est invalidé pendant des durées courtes des impulsions de ce monostable à chaque début de prises de vue. Dans ces conditions, on assure qu'à chaque début de prises de vue le démarrage de l'alimentation du tube à rayons X, par l'intermédiaire du redresseur 12, se fait en pont complet. C'est à dire avec un temps de montée de l'ordre de 1ms : le plus rapidement possible. Pendant cette mise en conduction, compte tenu d'une fréquence de commande de 20 KHertz le circuit de commande 8 envoie environ une vingtaine d'impulsions sur chacun des thyristors $T_1$ à $T_4$.

Le signal d'erreur délivré par le comparateur 45 est lui même comparé dans un autre comparateur 55, à une tension $V_s$ de mise en service automatique du pont complet. Compte tenu du signe de ce signal d'erreur et de la tension $V_s$, le comparateur 55 peut basculer et délivrer un signal positif en un état logique 1, introduit sur une troisième entrée 56 de la porte NOR 47. Celle-ci délivre alors un signal nul qui invalide de nouveau les thyristors $T_5$ et $T_6$ et qui valide les thyristors $T_1$

et $T_4$. En conséquence, si la puissance demandée est très forte, le circuit de commande 8 est invalidé, et on tolère l'ondulation résiduelle qu'on ne peut empêcher. Si la puissance consommée est faible, la tension aux bornes du tube 19 à rayons X ne chute pas beaucoup, et par l'intermédiaire des comparateurs 45 et 55 et de la porte 47 on permet le fonctionnement en demi-pont de l'onduleur 7.

## Revendications

1- Générateur haute tension à grande dynamique de puissance comprenant
- un premier redresseur (1) alternatif-continu pour redresser un signal électrique alternatif basse fréquence et basse tension en un signal continu basse tension,
- un onduleur (7) pont-complet ($T_1$-$T_4$) commandé en haute fréquence pour transformer ce signal continu basse tension en un signal alternatif haute fréquence et basse tension,
- un transformateur (11) pour élever la tension de ce signal alternatif haute fréquence et basse tension,
- et un deuxième redresseur (12) pour transformer un signal alternatif haute fréquence et haute tension ainsi obtenu en un signal continu haute tension, et
- un circuit (20) de connexion pour connecter (8) un point milieu du premier redresseur à un point milieu (21) de l'onduleur pont-complet lorsque le générateur est utilisé en basse puissance,
- caractérisé en ce que le circuit de connexion est un circuit commandé en haute fréquence.

2- Générateur selon la revendication 1, caractérisé en ce que le circuit de connexion comporte, en série dans la connexion, deux thyristors ($T_6$,$T_5$) montés tête bêche en parallèle, et un circuit (8) de commande pour déclencher alternativement chacun de ces thyristors deux fois de suite pour des cycles successifs du signal haute fréquence basse tension à produire.

3- Générateur selon la revendication 2, caractérisé en ce que le circuit de commande est prévu pour déclencher un deuxième thyristor de ce circuit de connexion alors que le premier est encore en train de conduire.

4- Générateur selon l'une quelconque des revendications 1 à 3, caractérisé en ce que le circuit de commande comporte des moyens (49,53) pour déconnecter le circuit de connexion lorsque le générateur est utilisé en haute puissance.

5- Générateur selon l'une quelconque des revendications 1 à 4, caractérisé en ce que le circuit de commande comporte des moyens (51,54,53) pour déconnecter automatiquement le circuit de connexion au début de chaque impulsion d'utilisation du générateur haute tension.

6- Générateur selon l'une quelconque des revendications 1 à 5, caractérisé en ce qu'il comporte des moyens de mesure de la valeur de la haute tension continue produite et en ce que le circuit de commande comporte des moyens (55,56) pour déconnecter automatiquement le circuit de connexion lorsque la haute tension mesurée devient inférieure à un seuil (Vs).

FIG_1

FIG_2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2415413 (SIEMENS)<br>* page 1, ligne 29 - page 2, ligne 21; revendication 1; figure 1 *<br>--- | 1 | H02M3/315<br>H05G1/12 |
| A | GB-A-2100480 (GENERAL EQUIPMENT MEDICAL SA)<br>* abrégé; figure 2 *<br>----- | 1 | |
| | | | **DOMAINES TECHNIQUES RECHERCHES (Int. Cl.5)**<br><br>H02M<br>H05G |

Le présent rapport a été établi pour toutes les revendications

| Lieu de la recherche | Date d'achèvement de la recherche | Examinateur |
|---|---|---|
| LA HAYE | 15 JUIN 1990 | BERTIN M.H.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T · théorie ou principe à la base de l'invention
E · document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P0402)